# FASCICULE DE BREVET EUROPEEN

(11) **EP 1 350 648 B1**
(45) Date de publication et mention de la délivrance du brevet: **22.11.2006**
(21) Numéro de dépôt: 03290629.9
(22) Date de dépôt: 13.03.2003
(51) Int. Cl.: B60H 1/34

(54) **Bandeau de décoration pour habitacle de véhicule susceptible d'assurer une diffusion douce d'air**
Dekorative Blende für einen Fahrzeuginnenraum zur sanften Luftverteilung
Decorating band for vehicle interior capable of ensuring a smooth air diffusion

(30) Priorité: 13.03.2002 FR 0203108
(43) Date de publication de la demande: 08.10.2003
(73) Titulaire: Key Plastics Interiors, 17300 Rochefort sur Mer (FR)
(72) Inventeur: Gouritin, Patrice, 17440 Aytre (FR)
(74) Mandataire: Lemoine, Robert

(56) Documents cités:
- EP-A- 1 080 958
- DE-A- 4 317 358
- DE-A- 10 010 688
- DE-A- 19 936 387
- FR-A- 1 106 998
- FR-A- 2 541 958
- FR-A- 2 762 806
- US-A- 1 768 085

## Description

La présente invention concerne un ensemble de diffusion d'air pour habitacle de véhicule, comprenant un bandeau de décoration ou d'ébénisterie disposé dans un logement, notamment d'une planche de bord du véhicule, et conformé pour diffuser de l'air dans l'habitacle à travers au moins une ouïe s'étendant sur une grande partie de sa longueur.

Dans certains habitacles de voitures, notamment les voitures haut de gamme, des bandeaux de décoration, de préférence d'ébénisterie, peuvent être rapportés ou faire partie intégrante de la planche de bord, des panneaux de portes ou tout autre panneau de l'habitacle afin de conférer à l'ensemble un aspect raffiné et plus luxueux.

Les habitacles comprennent également des dispositifs de diffusion de l'air, disposés de manière adéquate dans l'habitacle pour assurer une diffusion homogène. Ces dispositifs sont notamment présents au niveau de la planche de bord et se présentent sous la forme de buses de dégivrage au niveau du pied du pare-brise et d'aérateurs comportant chacun un orifice de sortie muni d'ailettes permettant d'orienter le flux d'air dans les directions haut/bas et/ou droite/gauche.

Pour ne pas encombrer la planche de bord et la console, ces aérateurs ont une section de diamètre relativement faible, si bien que pour obtenir un débit important d'air, il est nécessaire d'utiliser des vitesses d'injection relativement élevées.

Ainsi, lorsque l'utilisateur cherche à faire varier rapidement la température de l'habitacle, par exemple au démarrage, une grande quantité d'air doit être diffusée dans l'habitacle. Cette diffusion massive d'air provoque une sensation désagréable liée aux jets d'air trop directifs et trop violents provenant des aérateurs. Par ailleurs, les vitesses d'air relativement élevées génèrent des bruits d'air importants qui augmentent l'inconfort.

Une première solution consiste à prévoir un grand nombre d'aérateurs dans l'habitacle afin d'augmenter le débit global tout en réduisant les vitesses d'injection. Toutefois, cette solution ne donne pas toujours satisfaction car ces aérateurs ne sont généralement pas esthétiques et nécessitent des conduits d'alimentation nombreux contribuant à augmenter fortement le coût de l'équipement.

Une autre solution consiste à prévoir au niveau de la planche de bord un orifice de grande section masqué par une peau perméable à l'air. Même si d'un point de vue esthétique, cette solution est acceptable car la continuité de l'aspect du tableau de bord est assurée, elle ne donne pas entièrement satisfaction car la peau perméable génère des pertes de charge relativement importantes qui doivent être compensées par des ventilateurs de fortes puissances. Par ailleurs, cette peau peut s'encrasser et ne permet pas un réglage en orientation du flux d'air.

FR-A-1 106 998 décrit un ensemble de diffusion d'air destiné à introduire de l'air frais ou conditionné à l'intérieur de l'habitacle d'un véhicule.

Cet ensemble de diffusion comprend un conduit en forme d'auge inversée fixée au niveau d'une ouverture longitudinale ménagée dans le plafond de l'habitacle.

Il comprend également un déflecteur situé sous l'auge inversée et délimitant avec le plafond deux ouïes à travers lesquelles l'air frais ou conditionné peut être introduit dans l'habitacle.

A sa sortie des ouïes, l'air est dirigé vers le plafond sans qu'il soit possible de modifier sa direction.

La présente invention a quant à elle été conçue pour permettre une modification de l'orientation de l'air admis dans un habitacle de véhicule et, pour ce faire, elle a pour objet un ensemble de diffusion d'air ayant la structure indiquée au premier paragraphe ci-dessus et qui est caractérisé en ce que le bandeau est mobile dans le logement de manière à définir l'ouïe au niveau de l'un au moins de ses deux bords longitudinaux et à orienter ainsi le flux d'air.

D'autres caractéristiques de l'ensemble de diffusion selon la présente invention sont mentionnées dans les revendications secondaires.

Plusieurs modes d'exécution de la présente invention seront décrits ci-après à titre d'exemples nullement limitatifs en référence aux dessins annexés dans lesquels:
- la figure 1 est une vue schématique en perspective d'une planche de bord équipée de bandeaux décoratifs selon l'invention,
- les figures 2A, 2B et 2C illustrent en coupe les différentes positions du dispositif de l'invention selon un premier mode de réalisation,
- les figures 3A, 3B et 3C illustrent en coupe les différentes positions du dispositif de l'invention selon un deuxième mode de réalisation,
- la figure 4 est une vue éclatée en perspective des différents éléments susceptibles de constituer le dispositif de l'invention,
- la figure 5 est une vue en perspective d'une variante de l'invention,
- la figure 6 est une vue en coupe de l'invention illustrée figure 5, et
- la figure 7 est une vue en coupe d'une autre variante.

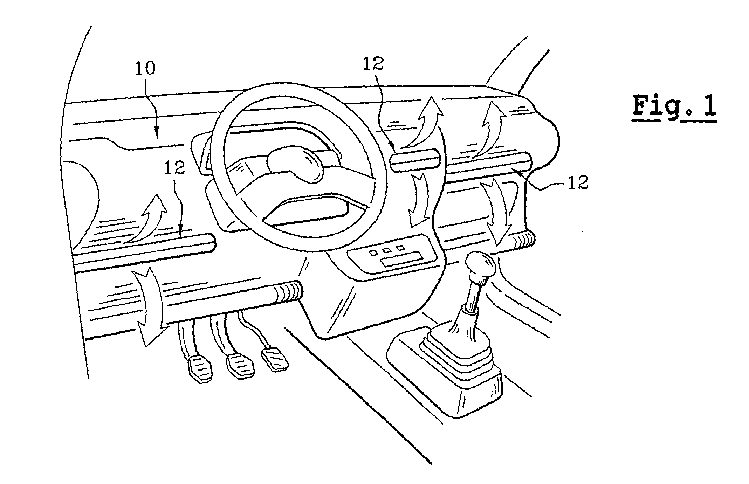

Sur la figure 1, on a représenté une planche de bord 10 équipée de bandeaux de décoration 12 selon l'invention. Bien entendu, ces bandeaux de décoration d'ébénisterie peuvent être disposés à d'autres emplacements de l'habitacle, en particulier au niveau des portes.

Selon l'invention, les bandeaux de décoration intègrent des moyens de diffusion d'air sous forme d'ouïes 14 qui s'étendent sur une grande partie de leur longueur. Compte tenu des dimensions desdits bandeaux, les ouïes 14 constituent chacune une ouverture relativement importante assurant une diffusion douce, la capacité de débit étant élevée. Par ailleurs, de part la fonction d'origine des bandeaux, à savoir des éléments de décoration, il n'est pas nécessaire de recouvrir ces grandes ouïes 14 par une peau perméable susceptible de les dissimuler mais de générer de fortes pertes de charge d'un point de vue aéraulique et de s'encrasser.

Selon l'invention, le bandeau de décoration 12 est fixé sur un support 16 lui-même rapporté par des moyens appropriés dans un logement 18 ménagé au niveau de la planche de bord 10.

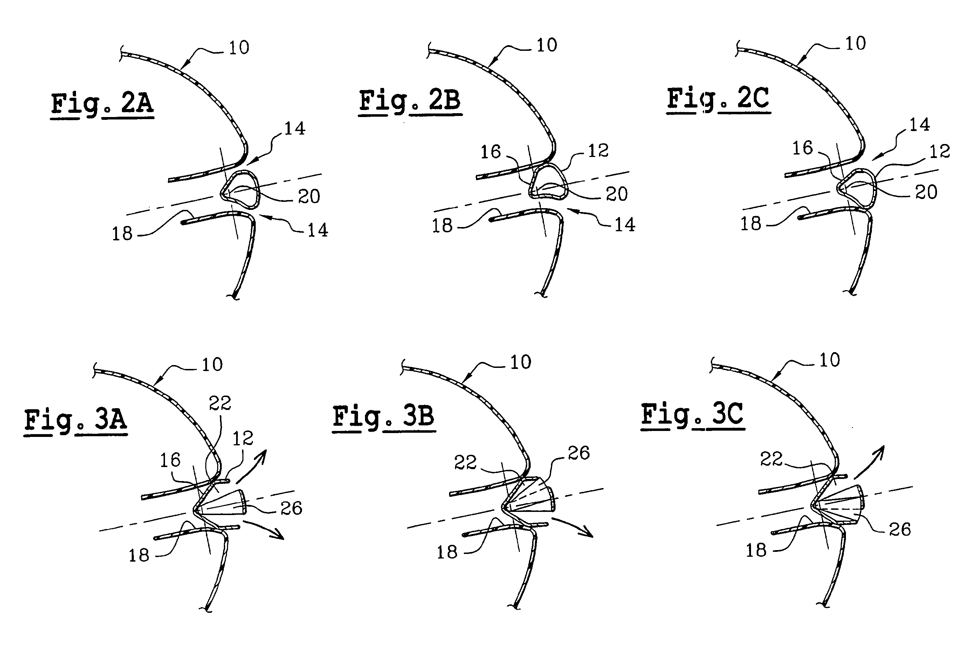

Selon un premier mode de réalisation illustré par les figures 2A à 2C, un jeu entre le bandeau 12 et son logement 18 est prévu au niveau de l'un des bords longitudinaux du bandeau ou des deux bords, ledit jeu ou lesdits jeux formant des ouïes 14. Avantageusement, le bandeau 12 comprend des moyens pour orienter le flux d'air. A cet effet, le bandeau 12 peut se déplacer dans son logement 18 de manière à laisser un jeu, soit au niveau d'un de ses bords longitudinaux, par exemple en bas sur la figure 2B ou en haut sur la figure 2C, ou soit au niveau de ses deux bords longitudinaux comme illustré par la figure 2A. Dans ce cas, le bandeau 12 et son support 16 peuvent de préférence pivoter selon un axe longitudinal 20, des portées étant avantageusement prévues au niveau des flancs de l'ensemble formé par le bandeau et son support. Selon les variantes, le déplacement du bandeau 12 peut être réalisé manuellement ou grâce à une motorisation.

Selon cette première solution un ou plusieurs conduits permettent d'acheminer l'air vers le logement 18. Avantageusement, l'air peut être traité, par exemple par odorisation, ou chauffé en amont du bandeau par tout moyen approprié.

Selon un second mode de réalisation, les ouïes 14 sont ménagées dans le bandeau 12. Dans ce cas, le bandeau 12 est ajusté à son logement 18.

Selon un mode de réalisation préféré, le bandeau 12 est rapporté sur un support 16, fixé lui-même sur la planche de bord 10, le bandeau et le support formant une cavité 22 dans laquelle débouchent un ou plusieurs conduits d'alimentation en air.

Avantageusement, en complément ou en remplacement des moyens connus pour traiter et chauffer l'air, la cavité 22 comprend des moyens pour traiter et/ou chauffer l'air, par exemple sous la forme d'un filtre 24.

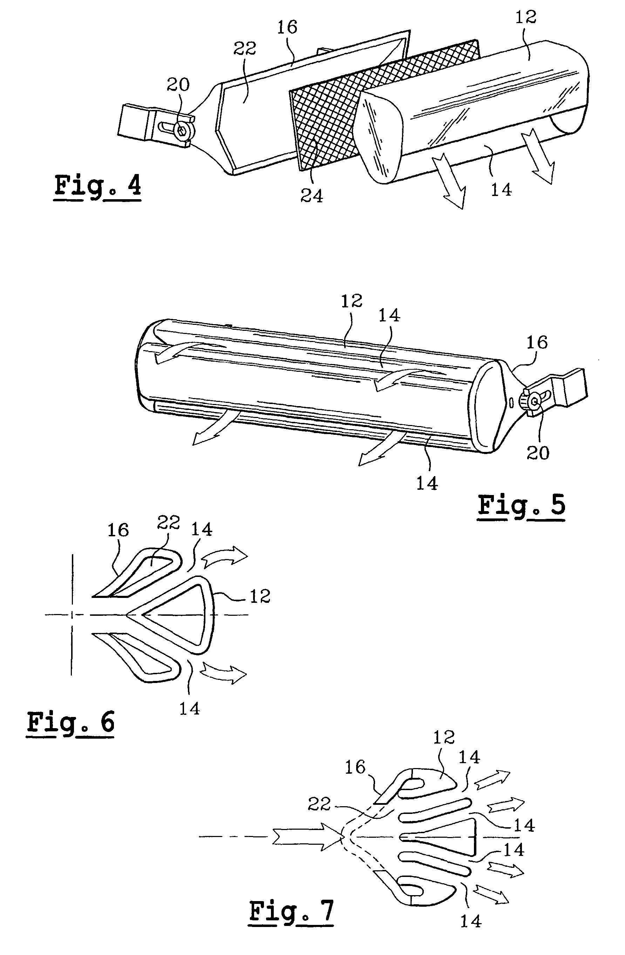

Comme illustré par les figures 4, 6 et 7, le bandeau 12 peut comprendre une, deux ou plusieurs ouïes 14 ménagées au niveau de sa face. De préférence, le bandeau comprend des moyens pour fermer les ouïes. En présence, de plusieurs ouïes, ils constituent des moyens pour orienter le flux d'air comme illustré sur les figures 3A à 3C. Selon un mode de réalisation préféré, ces moyens se présentent sous la forme d'un ou plusieurs volets 26 disposés dans la cavité 22, susceptibles de pivoter contre la face interne du bandeau.

Lorsque les volets 26 ne sont pas disposés au droit des ouïes comme illustré par la figure 3A, l'air s'écoule par les ouïes supérieure et inférieure.

Lorsqu'un volet est disposé au droit de l'ouïe supérieure, l'air ne peut s'écouler que par l'ouïe inférieure comme illustré par la figure 3B. De la même façon, lorsque le volet est disposé au droit de l'ouïe inférieure, le flux d'air ne peut s'écouler que par l'ouïe supérieure, comme illustré par la figure 3C.

Selon une autre caractéristique, les deux modes de réalisation peuvent être combinés, à savoir un bandeau mobile dans son logement comme illustré par les figures 2A à 2C peut comprendre des ouïes au niveau de sa face comme illustré par les figures 3A à3C. De plus, ce bandeau peut être équipé au niveau de sa face visible des dispositifs de diffusion de l'art antérieur à savoir des aérateurs de faibles dimensions ou des orifices recouverts de peau perméable.

Avantageusement, des moyens pour éclairer sont prévus à l'arrière du bandeau, par exemple disposés dans la cavité 22.

Selon une autre caractéristique, le bandeau ou son revêtement visible sont interchangeables à des fins de personnalisation.

Bien entendu, l'invention n'est évidemment pas limitée au mode de réalisation représenté et décrit ci-dessus, mais en couvre au contraire toutes les variantes, notamment en ce qui concerne les dimensions et les matériaux des bandeaux 12, et de leur position dans l'habitacle.

Enfin, les moyens de commande habituels prévus pour gérer la climatisation de l'habitacle peuvent être utilisés pour commander l'écoulement de l'air par les bandeaux, et éventuellement complétés par des commandes pour contrôler l'orientation de l'écoulement de l'air.

## Revendications

1. Ensemble de diffusion d'air pour habitacle de véhicule, comprenant un logement et un bandeau de décoration ou d'ébénisterie disposé dans le logement (18), notamment d'une planche de bord du véhicule, et conformé pour diffuser de l'air dans l'habitacle à travers au moins une ouïe (14) s'étendant sur une grande partie de sa longueur, **caractérisé en ce que** le bandeau est mobile dans le logement (18) de manière à définir l'ouïe (14) au niveau de l'un au moins de ses deux bords longitudinaux et à orienter ainsi le flux d'air.

2. Ensemble de diffusion d'air selon la revendication 1, **caractérisé en ce que** le bandeau est porté par un support (16) monté pivotant sur son axe longitudinal.

3. Ensemble de diffusion d'air selon la revendication 1 ou 2, **caractérisé en ce que** le bandeau comprend au moins une ouïe (14) ménagée en lui de façon à déboucher au niveau de sa face.

4. Ensemble de diffusion d'air selon la revendication 3, **caractérisé en ce que** le bandeau comprend des moyens pour orienter le flux d'air.

5. Ensemble de diffusion d'air selon la revendication 4, **caractérisé en ce que** les moyens d'orientation du flux d'air comprennent au moins un volet (26) susceptible d'obturer au moins une ouïe (14).

6. Ensemble de diffusion d'air selon l'une quelconque des revendications précédentes, **caractérisé en ce que** des moyens pour traiter et/ou chauffer l'air sont prévus derrière le bandeau.

7. Ensemble de diffusion d'air selon l'une quelconque des revendications précédentes, **caractérisé en ce que** des moyens d'éclairage sont prévus derrière le bandeau.

## Claims

1. An air diffuser unit for a vehicle passenger compartment, comprising a housing and a decorative or wood garnish molding band disposed in the housing (18), in particular of a dashboard of the vehicle, and configured for diffusing air into the passenger compartment through at least one louver (14) extending over a great part of its length, **characterized in that** said band is movable in the housing (18) so as to define the louver (14) at least at one of its two longitudinal edges and thereby direct the air flow.

2. The air diffuser unit according to claim 1, **characterized in that** the band is carried by a support (16) pivotally mounted about its longitudinal axis.

3. The air diffuser unit according to claim 1 or 2, **characterized in that** the band comprises at least one louver (14) formed therein so as to open onto its face.

4. The air diffuser unit according to claim 3, **characterized in that** the band comprises means for directing the air flow.

5. The air diffuser unit according to claim 4, **characterized in that** the air flow directing means comprise at least one shutter (26) capable of closing at least one louver (14).

6. The air diffuser unit according to any of the preceding claims, **characterized in that** means for processing and/or heating the air are provided behind the band.

7. The air diffuser unit according to any of the preceding claims, **characterized in that** lighting means are provided behind the band.

## Patentansprüche

1. Luftverteilereinheit für die Fahrgastzelle eines Fahrzeugs, die eine Aufnahme und eine Dekorations- oder Holzbandleiste, die in der Aufnahme (18), im Besonderen eines Armaturenbretts des Fahrzeugs, angeordnet ist, umfasst und dazu eingerichtet ist, über wenigstens einen Einlass (14), der sich über einen großen Teil ihrer Länge erstreckt, Luft in der Fahrgastzelle zu verteilen, **dadurch gekennzeichnet, dass** die Bandleiste in der Aufnahme (18) so bewegt werden kann, dass sie den Einlass (14) auf Höhe von wenigstens einem ihrer beiden Längsbretter bilden kann und auf diese Weise den Luftstrom richten kann.

2. Luftverteilereinheit nach Anspruch 1, **dadurch gekennzeichnet, dass** die Bandleiste von einem Träger (16) getragen wird, der um seine Längsachse schwenkbar montiert ist.

3. Luftverteilereinheit nach Anspruch 1 oder 2, **dadurch gekennzeichnet, dass** die Bandleiste wenigstens einen Einlass (14) umfasst, der so in ihr angeordnet ist, dass er auf Höhe ihrer Front mündet.

4. Luftverteilereinheit nach Anspruch 3, **dadurch gekennzeichnet, dass** die Bandleiste Einrichtungen zum Richten des Luftstroms umfasst.

5. Luftverteilereinheit nach Anspruch 4, **dadurch gekennzeichnet, dass** die Einrichtungen zum Richten des Luftstroms wenigstens eine Klappe (26) umfassen, die wenigstens einen Einlass (14) verschließen kann.

6. Luftverteilereinheit nach einem der vorhergehenden Ansprüche, **dadurch gekennzeichnet, dass** Einrichtungen zum Behandeln und/oder Erwärmen der Luft hinter der Bandleiste vorgesehen sind.

7. Luftverteilereinheit nach einem der vorhergehenden Ansprüche, **dadurch gekennzeichnet, dass** Beleuchtungseinrichtungen hinter der Bandleiste vorgesehen sind.
